# EUROPÄISCHE PATENTSCHRIFT

(11) **EP 2 449 067 B1**
(45) Veröffentlichungstag und Bekanntmachung des Hinweises auf die Patenterteilung: **08.08.2018**
(21) Anmeldenummer: 10725801.4
(22) Anmeldetag: 25.06.2010
(51) Int. Cl.: C10M 111/02, C03B 40/02, C10M 103/04, C10M 105/24, C10M 125/04, C10M 129/40, C10M 169/04, C10N 10/06, C10N 30/10, C10N 30/12, C10N 40/00, C10N 20/06

(54) **SCHMIERMITTEL FÜR HEIßE GLASPROZESSE UND VERWENDUNG DES SCHMIERMITTELS ZUR OBERFLÄCHENVEREDLUNG VON GLAS**
LUBRICANT FOR HOT GLASS PROCESSES AND USE OF THE LUBRICANT FOR THE SURFACE REFINEMENT OF GLASS
LUBRIFIANT POUR DES PROCÉDÉS DE FABRICATION DE VERRE À HAUTE TEMPÉRATURE ET UTILISATION DU LUBRIFIANT POUR AFFINER LA SURFACE DU VERRE

(30) Priorität: 30.06.2009 DE 102009031267; 22.12.2009 DE 102009060664
(43) Veröffentlichungstag der Anmeldung: 09.05.2012
(73) Patentinhaber: Hessenkemper, Heiko, 09603 Großschirma (DE)
(72) Erfinder: Hessenkemper, Heiko, 09603 Großschirma (DE)
(74) Vertreter: Eisenführ Speiser
(86) Internationale Anmeldenummer: PCT/EP2010/059098
(87) Internationale Veröffentlichungsnummer: WO 2011/000790

(56) Entgegenhaltungen:
- WO-A1-2004/096724
- WO-A1-2005/110936
- US-A- 2 308 988
- US-A- 2 952 555
- US-A- 5 670 463
- US-A- 5 898 022
- US-A1- 2008 022 723

## Beschreibung

Die Erfindung betrifft ein Schmiermittel für heiße Glasprozesse, das insbesondere bei Formenschmierprozessen in der Hohlglasindustrie, aber auch bei der Rollenschmierung in der Flachglasindustrie, bei der Schmierung von Flachglaspressformen, bei der Röhrenglasfertigung mit geschmierten Dornen oder bei der Schmierung der Walzen bei der Walzenformung von Glas Anwendung findet. Das Schmiermittel kann auch zur Oberflächenveredlung von Glas eingesetzt werden.

GB 557 411 A betrifft Aluminiumstearatlösungen und deren Herstellung, die als Textilveredlungsmittel zum Wasserdichtmachen und Leimungsmittel für Glasfasern, Baumwolle, Seide und andere gewebte oder mattenförmige Artikel Anwendung finden. Neben Aluminiumseifen und einem Lösungsmittel für diese Aluminiumseifen sind als weitere Bestandteile in den aufgeführten Zusammensetzungen Ammoniak und polare Lösungsmittel enthalten.

Die Formenschmierung dient im Allgemeinen dazu, ein komplexes Anforderungsprofil während der Formung zu beeinflussen wie: Steuerung des Wärmeübergang, Korrosionsschutz für die Formenmaterialien sowie tribologische Effekte. Diese Schmiermittel sind dominant auf Kohlenstoffbasis aufgebaut, wobei Additive wie Graphit einen langen Oxydationsschutz gewähren sollen und andere Additive wie z. B. Molybdän auf dieses Eigenschaftsprofil einen längeren positiven Einfluss ausüben sollen. Da die Schmierung der Formen in der Behälterglasindustrie einen nicht unwesentlichen Anteil der Aktivitäten des Maschinenführers ausmachen ist aus diesem Grund eine automatische Schmierung auf der Basis einer Acethylen-Berußung entwickelt worden, die reproduzierbar jeweils nach wenigen Zyklen die Form automatisch schmiert. Dies unterstreicht, dass die Wirkung der Schmiermittel auf kohlenstoffbasierten Effekten beruht. Weitere Additive sind z. B. auch Aluminiumverbindungen in Form von Stearaten, die mit einem Anteil von 1 - 3% im Schmiermittel enthalten sind, und als Stellmittel dienen. Die bekannten Schmiermittel haben keine oberflächenveredelnde Wirkung.

Eine Oberflächenveredelung von Gläsern bezüglich mechanischer und chemischer Eigenschaften ist durch den Kontakt der heißen Glasoberfläche mit einer AlCl₃-Atmosphäre möglich (DE 10 2006 034 431 A1). Ähnliches ist für den Kontakt der heißen Glasoberfläche mit metallischem Aluminium z.B. als Formgebungsmaterial in einer weiteren Patentanmeldung beschrieben (WO 2005/110936 A1). Beide Verfahren haben je nach Einsatzgebiet verschiedene verfahrenstechnische Nachteile und Probleme. Beim AlCl₃ sind die Bereitstellung der Atmosphäre und die möglichen chlorhaltigen Reaktionsprodukte zu nennen. Bei den Aluformen bedeuten unterschiedliche mechanische und thermische Eigenschaften des Formgebungsmaterials eine Adaption des gesamten Formgebungsprozesses. Zusätzlich wird die Wirksamkeit der Oberflächenveredelung durch den Aufbau einer Grenzschicht infolge Diffusion im Laufe der Zeit reduziert.

GB 981524 A betrifft Antioxydationszusammensetzungen, die Phosphor- und Schwefelverbindungen enthalten. Die beanspruchten Antioxydationszusammensetzungen werden bekannten Schmiermitteln zugesetzt, unter anderen auch Glasschmiermitteln.

GB 787699 A betrifft eine Methode zur Formung von Glasartikeln, wobei auf der Glasoberfläche ein dünner Metalloxidfilm vorhanden sein soll. Unter einer Vielzahl von Metallen, die einen solchen Metallfilm bilden können, ist auch Aluminium genannt. Bevorzugte Variante zur Erzielung des Oxidfilms ist die Verdampfung anorganischer Salze, insbesondere der Chloride.

DE 10 319 708 A 1 betrifft alkalihaltige Gläser mit modifizierten Glasoberflächen und Verfahren zu ihrer Herstellung. Eingesetzt werden dort wässrige Lösungen von Aluminiumchlorid und/oder Alaun.

Aufgabe der Erfindung ist es, Schmiermittel für heiße Glasprozesse zu entwickeln, die zu einer Oberflächenveredlung der hergestellten Glasartikel, insbesondere zur Festigkeitssteigerung und zur Verbesserung der chemischen Beständigkeit, führen.

Im Rahmen einer besonders bevorzugten Variante wird die Aufgabe durch ein Schmiermittel gelöst, das aus kohlenstoffbasierten Lösungsmitteln und/oder Suspensionen besteht, die bis 70 Gewichtsprozent Aluminiumpulver mit einer Korngröße von 10 nm bis 500 µm, bevorzugt mit einer Korngröße 1 µm bis 100 µm enthalten. Besonders wirkungsvoll ist das Schmiermittel mit einem Aluminiumpulveranteil von 45 bis 55 Gewichtsprozent. Unter Schmiermitteleinsatz und Schmierung im Sinne der vorliegenden Erfindung wird auch das Einbinden des Aluminiumpulvers in Lacke und ein damit dann gecoatetes Formenmaterial verstanden. Bis zu den angegebenen Gewichtsgrenzen für Aluminium insgesamt können auch die AI-Salze der Fettsäuren in Kombination mit metallischem AI als Schmiermittel eingesetzt werden. Die Aluminiumsalze der Fettsäuren sind Mono-, Di- oder Tri-Fettsäurealuminiumsalze oder Gemische dieser Fettsäurealuminiumsalze. Bevorzugt enthalten sind Mono-, Di- oder Tri-Aluminiumstearate oder Gemische dieser drei Aluminiumstearate. Die kohlenstoffbasierten unpolaren Lösungsmittel und/oder Suspensionsmittel können beliebige Öle wie Kompressorenöle oder auch handelsübliche Speiseöle sein. Diese Lösungsmittel/Dispersionsmittel stellen als Schmiermittel einen Oxydationsschutz dar. Darüber hinausgehend können sie die Aluminiumsalze der Fettsäuren in ausreichender Menge lösen und/oder suspendieren, insbesondere das Aluminiumpulver suspendieren, oder in sonstiger Weise dispergieren.

Im Rahmen einer Weiterbildung besteht ein Schmiermittel aus 5 - 95 Gew.%, vorzugsweise 30 - 70 Gew. %, Aluminiumsalzen der Fettsäuren und 95 - 5 Gew.%, vorzugsweise 70 - 30 Gew.%, kohlenstoffbasierten Lösungsmitteln und/oder Suspensionsmitteln besteht. Die Aluminiumsalze der Fettsäuren sind bevorzugt Mono-, Di- oder Tri-Fettsäurealuminiumsalze oder Gemische dieser Fettsäurealuminiumsalze. Bevorzugt enthalten sind Mono-, Di- oder Tri-Aluminiumstearate oder Gemische dieser drei Aluminiumstearate. Die kohlenstoffbasierten unpolaren Lösungsmittel/Suspensionsmittel können bevorzugt beliebige Öle wie Kompressorenöle oder auch handelsübliche Speiseöle sein. Diese bevorzugten Lösungsmittel und/oder Suspensionsmittel stellen als Schmiermittel einen Oxydationsschutz dar. Darüber hinausgehend können sie die Aluminiumsalze der Fettsäuren in ausreichender Menge lösen und/oder suspendieren oder in sonstiger Weise dispergieren.

Die Variante und Weiterbildungen der Erfindung können allein oder in Kombination zur Realisierung der Erfindung genutzt werden.

Mit dem erfindungsgemäßen Schmiermittel eröffnen sich für heiße Glasprozesse Veredlungsmöglichkeiten. Das erfindungsgemäße Schmiermittel kann im Flachglasbereich die Transportprobleme minimieren bei gleichzeitiger Oberflächenveredlung. Es können gezielt Veredlungsschritte eingebaut werden, indem die Glasoberfläche mit dem Schmiermittel benetzt und erhitzt wird. Das Schmiermittel findet Anwendung beim Pressen von heißem Flachglas mit entsprechend geschmierten Platten. Es ist auch einsetzbar bei der Röhrenglasformung, indem mit dem erfindungsgemäßen Schmiermittel geschmierte Dorne verwendet werden. Das Schmiermittel findet Anwendung bei der Schmierung von Walzen zur Formgebung bzw. zum Heißtransport von Glas. Die Veredlung von Faserglasoberflächen wird erreicht, indem die im Online-Ziehprozess schon erkaltete Faser durch das erfindungsgemäße Schmiermittel gezogen und erneut erhitzt wird, wobei die hierfür benötigten Temperaturen zwischen 50 °C unterhalb und 150 °C oberhalb der Transformationstemperatur TG des Glases liegen sollte.

Das erfindungsgemäße Schmiermittel führt zu einer signifikanten Festigkeitssteigerung und zu einer Verbesserung der chemischen Beständigkeiten der hergestellten Glaserzeugnisse. Durch den Einsatz des erfindungsgemäßen Schmiermittels wurde eine sich ständige erneuernde Al-Kontaktmöglichkeit zur heißen Glasoberfläche gefunden, ohne die Problematik der Gasphasentechnologie lösen zu müssen.

Darüberhinaus haben sich die erfindungsgemäßen Maßnahmen oder solche gemäß einer der Weiterbildungen als besonders vorteilhaft erwiesen, um einen erhöhten Korrosionsschutz bei Produktionsmitteln zur Verfügung zu stellen. Insbesondere hat sich gezeigt, dass im Rahmen einer Walzglasherstellung oder bei Formgebungsprozessen für Formglas eingesetzte Produktionsmittel eine höhere Standzeit infolge geringerer Korrosionsanfälligkeit aufweisen. Insbesondere betrifft dies Walzen, Formenmaterial oder sonstige Produktionsmittel, bei denen sich aufgrund der Schmiermittel gemäß dem Konzept der Erfindung vergleichsweise einfach Grenzflächenbeschichtungen ausbilden, die als ein vergleichsweise beständiges und korrosionshemmendes Coating auf dem Produktionsmittel wirken.

### Beispiel 1

In einem Behälterglaswerk wurden die neuen Schmiermittel gestestet an einer braunen, leichtgewichtigen Einweg Bierflasche mit einem Inhalt von 0,33 I und einem Gewicht von 139 g. Sie wurde an einer Dreifachtropfen, 10 Stationsmaschine produziert. In laufender Produktion wurde eine Fertigformschmierung eingesetzt, wobei vom neuen Schmiermittel eine Menge kleiner 5 g eingesetzt und alle anderen Prozessschritte gleich gehalten wurden. Das Schmiermittel bestand aus 35 Gew.% Aluminiumtristearat und 65 Gew.% Kompressorenöl. Es wurden am kalten Ende Berstdruckuntersuchungen mit einem Standartprüfgerät von AGR (American Glass Research) durchgeführt mit einer Mindestprobenzahl von 10 Stück pro Charge. Die Festigkeiten betrugen 20,3 bar mit einer Standartabweichung von 5,0 bar für dieselbe Formennummer in Normalproduktion, was auch dem Durchschnittswert für die gesamte Maschine an diesem Tag entsprach (Vergleichsproben). Direkt nach der Schmierung mit dem erfindungsgemäßen Schmiermittel zeigten die am kalten Ende geprüften Flaschen einen Mittelwert von 26,4 bar (4 bar Standartabweichung) und eine halbe Stunde später war überraschenderweise eine Verbesserung auf 29,6 bar (2,0 bar Standartabweichung) festzustellen. Die zur selben Zeit produzierten anderen Formennummern zeigten die Festigkeiten der Vergleichsproben. Die Bestimmung der chemischen Beständigkeiten (72 Stunden in 1,3 I destilliertem Wasser bei 90 °C, Ausgangsleitfähigkeit des Wassers 1,7 µS) zeigte folgende Ergebnisse:
ohne das Schiermittel hergestellte Flaschen:
   Eluatleitfähigkeit 6 µS
Mit dem Schmiermittel hergestellte Flaschen:
   direkt nach der Schmierung: Eluarleitfähigkeit 2,4 µS
   eine halbe Stunde später entnommene Flaschen: Eluatleitfähigkeit 2,7 µS.

### Ausführungsbeispiel

Kommerzielles Floatglas wurde in Proben der Größe 6,5 x 6,5 cm zugeschnitten, anschließend für 4 min bei 740 °C in einer Muffel erhitzt und dann zwischen zwei, mit Schmiermittel beaufschlagten Kühlplatten gehärtet. Die Abkühlgeschwindigkeit war durch die Temperatur und die Wärmekapazität der Platten so eingestellt, dass die Transformationstemperatur in einer Zeitspanne unter 2 Sekunden unterschritten wurde. Dies geschah ohne Schmiermittel, mit einem Schiermittel bestehend aus einem Gewichtsanteil Monostearat und zwei Gewichtsanteilen Rapsöl und mit einem erfindungsgemäß zusammengesetzten Schmiermittel aus einem Gewichtsanteil Aluminiumpulver und 2 Gewichtsanteilen Rapsöl. Darauf folgte die Untersuchung der chemischen Beständigkeit. Die Leitfähigkeiten wurden auf die auszulaugende Fläche und das Eluatvolumen normiert. Hierbei wurden unter sonst gleichen Versuchsbedingungen(48 h bei 90 °C in deionisiertem Wasser bei stabilen Oberflächen-Eluatvolumenverhältnis Werte kleiner 10 Mikrosiemens erreicht, während die unbehandelten ESG Gläser 40 Mikrosiemens aufwiesen.

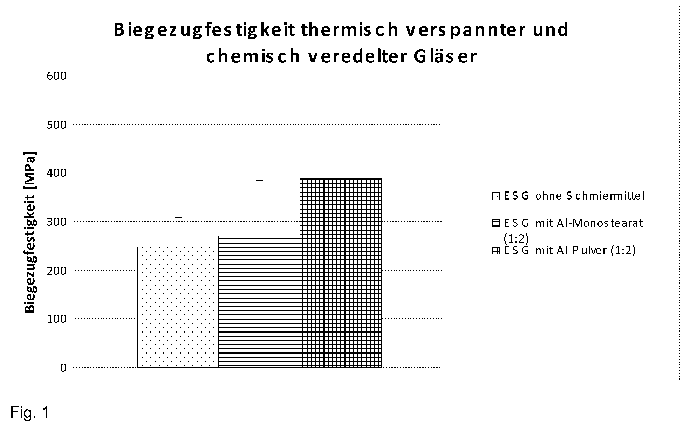

Die Biegebruchspannungen wurden mittels der Doppelringbiegeversuche ermittelt. Die Ergebnisse sind in nachfolgender Tabelle und in der Abbildung 1 dokumentiert. Mit dem erfindungsgemäß zusammengesetzten Schmiermittel konnten gegenüber der normalen Festigkeitssteigerung durch thermisches Härten nochmals deutliche Verbesserungen erreicht werden bei gleichzeitiger Verbesserung der chemischen Beständigkeit.

| Biegezugfestigkeit [MPA] | ESG ohne Schmiermittel | ESG mit Al-Monostearat (1:2) | ESG mit Al-Pulver (1:2) |
|---|---|---|---|
| Mittelwert | 247,41 | 269,34 | 388,38 |
| Max | 307,55 | 384,98 | 525,13 |
| Min | 61,49 | 116,73 | 216,18 |
| positiver Wert | 60,14 | 115,64 | 136,75 |
| negativer Wert | 185,92 | 152,61 | 172,2 |

Zusammenfassend betrifft die Erfindung ein Schmiermittel für heiße Glasprozesse und Verwendung des Schmiermittels zur Oberflächenveredlung von Glas, das insbesondere bei Formenschmierprozessen in der Hohlglasindustrie, aber auch bei der Rollenschmierung in der Flachglasindustrie, bei der Schmierung von Flachglaspressformen, bei der Röhrenglasfertigung mit geschmierten Dornen oder bei der Schmierung der Walzen bei der Walzenformung von Glas Anwendung findet. Das Schmiermittel kann auch zur Oberflächenveredlung von Glas eingesetzt werden.

Aufgabe der Erfindung ist es, Schmiermittel für heiße Glasprozesse zu entwickeln, die zu einer Oberflächenveredlung der hergestellten Glasartikel, insbesondere zur Festigkeitssteigerung und zur Verbesserung der chemischen Beständigkeit, führen.

Die Aufgabe wird durch ein Schmiermittel gelöst, das aus kohlenstoffbasierten Lösungsmitteln/Suspensionen besteht, die bis 70 Gewichtsprozent Aluminiumpulver mit einer Korngröße von 10 nm bis 500 µm enthalten und bevorzugt aus 5 - 95 Gew.%, vorzugsweise 30 - 70 Gew.%, Aluminiumsalzen der Fettsäuren und 95 - 5 Gew.%, vorzugsweise 70 - 30 Gew.% kohlenstoffbasierten Lösungsmitteln besteht.

## Patentansprüche

1. Schmiermittel für heiße Glasprozesse, **gekennzeichnet dadurch, dass** es aus kohlenstoffbasierten Lösungsmitteln und/oder Suspensionsmittel besteht, die bis 70 Gewichtsprozent Aluminiumpulver mit einer Korngröße von 10 nm bis 500 µm enthalten.

2. Schmiermittel für heiße Glasprozesse nach Anspruch 1, **gekennzeichnet dadurch, dass** ein Teil des Aluminiumpulvers durch Aluminiumsalze der Fettsäuren ersetzt ist.

3. Schmiermittel für heiße Glasprozesse nach Anspruch 2, **gekennzeichnet dadurch, dass** es 30 - 70 Gew.% Aluminiumsalze der Fettsäuren und 70 - 30 Gew.-% kohlenstoffbasierte Lösungsmittel und/oder Suspensionsmittel enthält.

4. Schmiermittel für heiße Glasprozesse nach einem der Ansprüche 1 bis 3, **gekennzeichnet dadurch, dass** die Aluminiumsalze der Fettsäuren Mono-, Di- oder Tri-Fettsäurealuminiumsalze oder Gemische dieser Fettsäurealuminiumsalze sind.

5. Schmiermittel für heiße Glasprozesse nach Anspruch 4, **gekennzeichnet dadurch, dass** die Aluminiumsalze der Fettsäuren Mono-, Di- oder Tri-Aluminiumstearate oder Gemische dieser drei Aluminiumstearate sind.

6. Schmiermittel für heiße Glasprozesse nach einem der Ansprüche 1 bis 5, **gekennzeichnet dadurch, dass** als kohlenstoffbasierte Lösungsmittel und/oder Suspensionsmittel Öle enthalten sind.

7. Schmiermittel für heiße Glasprozesse nach einem der Ansprüche 1 bis 6, **gekennzeichnet dadurch, dass** als kohlenstoffbasierte Lösungsmittel und/oder Suspensionsmittel Lacke enthalten sind

8. Verwendung des Schmiermittels nach einem der Ansprüche 1 bis 7 zur Oberflächenveredlung von Glas, indem die heißen Glasoberflächen benetzt werden.

9. Verwendung des Schmiermittels nach einem der Ansprüche 1 bis 7 zur Oberflächenveredlung von Glas indem kalte Glasoberflächen unterhalb der Transformationstemperatur des Glases mit dem Schmiermittel benetzt und die Glasoberflächen auf Temperaturen im Bereich 50 °C unterhalb und 150 °C oberhalb der Transformationstemperatur des Glases erhitzt werden.

## Claims

1. Lubricant for hot glass processes, **characterized in that** it consists of carbon-based solvents and/or suspending agents which contain up to 70% by weight of aluminium powder having a particle size of 10 nm to 500 µm.

2. Lubricant for hot glass processes according to claim 1, **characterized in that** a portion of the aluminium powder is replaced by aluminium salts of fatty acids.

3. Lubricant for hot glass processes according to claim 2, **characterized in that** it contains 30-70% by weight of aluminium salts of fatty acids and 70-30% by weight of carbon-based solvents and/or suspending agents.

4. Lubricant for hot glass processes according to one of claims 1 to 3, **characterized in that** the aluminium salts of fatty acids are mono-, di- or tri-fatty acid aluminium salts or mixtures of these fatty acid aluminium salts.

5. Lubricant for hot glass processes according to claim 4, **characterized in that** the aluminium salts of fatty acids are mono-, di- or tri-aluminium stearates or mixtures of these three aluminium stearates.

6. Lubricant for hot glass processes according to one of claims 1 to 5, **characterized in that** the carbon-based solvents and/or suspending agents contained in said lubricant are oils.

7. Lubricant for hot glass processes according to one of claims 1 to 6, **characterized in that** the carbon-based solvents and/or suspending agents contained in said lubricant are lacquers.

8. Use of the lubricant according to one of claims 1 to 7 for the surface refinement of glass by wetting the hot glass surfaces.

9. Use of the lubricant according to one of claims 1 to 7 for the surface refinement of glass by wetting cold glass surfaces below the glass transition temperature with the lubricant and heating the glass surfaces to temperatures in the range 50°C below and 150°C above the glass transition temperature.

## Revendications

1. Lubrifiant destiné à des processus de fabrication de verre à haute température, **caractérisé en ce qu'**il est constitué de solvants et/ou de suspensions à base de carbone contenant jusqu'à 70% en poids de poudre d'aluminium avec une granulométrie de 10 nm à 500 microns.

2. Lubrifiant destiné à des processus de fabrication de verre à haute température selon la revendication 1, **caractérisé en ce qu'**une partie de la poudre d'aluminium est remplacée par des sels d'aluminium d'acides gras.

3. Lubrifiant destiné à des processus de fabrication de verre à haute température selon la revendication 2, **caractérisé en ce qu'**il est contient de 30 à 70% en poids de sels d'aluminium d'acides gras et de 70 à 30% en poids de solvants et/ou d'agents de suspension à base de carbone.

4. Lubrifiant destiné à des processus de fabrication de verre à haute température selon l'une des revendications 1 à 3, **caractérisé en ce que** les sels d'aluminium d'acides gras sont des sels mono-, di- ou tri-sels d'aluminium d'acides gras ou des mélanges de ces sels d'aluminium d'acides gras.

5. Lubrifiant destiné à des processus de fabrication de verre à haute température selon la revendication 4, **caractérisé en ce que** les sels d'aluminium d'acides gras sont des mono-, di- ou tri-stéarates d'aluminium ou des mélanges de ces trois stéarates d'aluminium.

6. Lubrifiant destiné à des processus de fabrication de verre à haute température selon l'une quelconque des revendications 1 à 5, **caractérisé en ce qu'**il comporte des huiles en tant que solvants et/ou agents de suspension à base de carbone.

7. Lubrifiant destiné à des processus de fabrication de verre à haute température selon l'une des revendications 1 à 6, **caractérisé en ce qu'**il comporte des laques en tant que solvants et/ou agents de suspension à base de carbone.

8. Utilisation du lubrifiant selon l'une quelconque des revendications 1 à 7 pour la finition superficielle de verre par mouillage des surfaces chaudes du verre.

9. L'utilisation du lubrifiant selon l'une quelconque des revendications 1 à 7 pour la finition superficielle de verre par mouillage des surfaces froides du verre en dessous de la température de transition vitreuse du verre avec le lubrifiant et le chauffage des surfaces de verre à des températures dans la plage de 50°C en-dessous et 150°C au-dessus de la température de transition vitreuse du verre.
